# DEMANDE DE BREVET EUROPEEN

(11) **EP 3 787 193 A1**
(43) Date de publication de la demande: **03.03.2021**
(21) Numéro de dépôt: 20191827.3
(22) Date de dépôt: 19.08.2020
(51) Int. Cl.: H04B 5/00

(54) **GESTION DE PRIORITÉS**

(30) Priorité: 30.08.2019 FR 1909585
(71) Demandeur: STMicroelectronics (Rousset) SAS, 13790 Rousset (FR)
(72) Inventeur: TRAMONI, Alexandre, 83330 LE BEAUSSET (FR)
(74) Mandataire: Cabinet Beaumont

(57) **Abrégé**

La présente description concerne un dispositif (1) comportant : un premier circuit (31) d'émission en champ proche ; un deuxième circuit (33) ; et une liaison matérielle (36) reliant, de préférence connectant, le premier circuit au deuxième circuit, la liaison étant dédiée à une gestion de priorités entre le premier circuit et le deuxième circuit.

## Description

### Domaine technique

La présente description concerne de façon générale les circuits électroniques et, plus particulièrement, les transpondeurs électromagnétiques. La présente description s'applique notamment aux dispositifs électroniques intégrant un circuit de communication en champ proche (NFC - Near Field Communication).

### Technique antérieure

Les systèmes de communication à transpondeurs électromagnétiques sont de plus en plus fréquents, en particulier depuis le développement des technologies de communication en champ proche (NFC - Near Field Communication) . Ces systèmes exploitent un champ électromagnétique radiofréquence généré par un dispositif (terminal ou lecteur) pour communiquer avec un autre dispositif (carte).

Une émission d'un tel champ électromagnétique par un dispositif NFC peut parfois perturber d'autres fonctions mises en œuvre par le dispositif NFC. Dans le cas, par exemple, d'un téléphone mobile comportant un circuit NFC, l'émission de champ est typiquement susceptible d'interférer avec le rafraîchissement d'un écran principal du téléphone.

Le document US 2012/149301 décrit un récepteur pour des communication en champ proche et pour des fonctionnalités d'alimentation sans fil.

Le document WO 2016/137466 décrit une commande de dispositif d'entrée pour un panneau d'affichage.

Le document CN 106453843 décrit un procédé et un terminal pour empêcher l'interférence d'un signal RF avec un affichage d'un écran.

### Résumé de l'invention

Il existe un besoin d'éviter que l'émission en champ proche d'un dispositif NFC ne vienne perturber d'autres fonctions mises en œuvre par le dispositif.

Un mode de réalisation pallie tout ou partie des inconvénients des dispositifs NFC connus.

Un mode de réalisation prévoit un dispositif comportant :
un premier circuit d'émission en champ proche ;
un deuxième circuit ; et
une liaison matérielle reliant, de préférence connectant, le premier circuit au deuxième circuit, la liaison étant dédiée à une gestion de priorités entre le premier circuit et le deuxième circuit,
dans lequel la gestion de priorités est effectuée par au moins un circuit configuré de sorte que, si le premier circuit reçoit une commande d'inhibition, transmise par le deuxième circuit, pendant une salve d'émission de champ, l'inhibition du premier circuit est retardée jusqu'à la fin de ladite salve.

Un mode de réalisation prévoit un procédé dans lequel une liaison matérielle d'un dispositif reliant, de préférence connectant, un premier circuit d'émission en champ proche à un deuxième circuit est dédiée à une gestion de priorités entre le premier circuit et le deuxième circuit.

Selon un mode de réalisation, la gestion de priorités est adaptée à empêcher une émission en champ proche par le premier circuit.

Selon un mode de réalisation, le deuxième circuit est un microcontrôleur.

Selon un mode de réalisation, le deuxième circuit est un circuit de communication ultra large bande.

Selon un mode de réalisation, la liaison véhicule un premier signal binaire d'inhibition du premier circuit, transmis par le deuxième circuit.

Selon un mode de réalisation, le premier signal est transmis au premier circuit pendant un rafraîchissement d'un écran.

Selon un mode de réalisation, le premier signal est transmis au premier circuit pendant une émission radiofréquence commandée par le deuxième circuit.

Selon un mode de réalisation, le premier signal est traité de façon logicielle.

Selon un mode de réalisation, le premier signal est traité par une machine d'états en logique câblée faisant partie du premier circuit.

Selon un mode de réalisation, la liaison véhicule un deuxième signal binaire d'état du premier circuit, transmis par le deuxième circuit.

Selon un mode de réalisation, la liaison comporte :
un premier conducteur, dédié à une transmission depuis le premier circuit vers le deuxième circuit ; et
un deuxième conducteur, dédié à une transmission depuis le deuxième circuit vers le premier circuit.

Selon un mode de réalisation, l'un des deux conducteurs véhicule le premier signal et l'autre conducteur véhicule le deuxième signal.

Un mode de réalisation prévoit un téléphone mobile adapté à mettre en œuvre le procédé tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
La figure 1 représente, de façon très schématique et sous forme de blocs, un exemple de système du type auquel s'appliquent, à titre d'exemple, des modes de réalisation décrits ;
La figure 2 représente, de façon très schématique et sous forme de blocs, un mode de réalisation d'un dispositif de communication en champ proche ;
La figure 3 représente, par des vues A, B et C, des chronogrammes de modes de mise en œuvre de procédés de commande du dispositif décrit en relation avec la figure 2 ;
La figure 4 représente, de façon schématique, un mode de réalisation d'un circuit de commande du dispositif décrit en relation avec la figure 2 ;
La figure 5 représente, de façon schématique, un autre mode de réalisation d'un circuit de commande du dispositif décrit en relation avec la figure 2 ;
La figure 6 est un diagramme d'enchaînement d'étapes d'un mode de mise en œuvre d'un procédé de commande du circuit décrit en relation avec la figure 5 ;
La figure 7 représente, par des vues A et B, des chronogrammes du procédé de commande décrit en relation avec la figure 6 ; et
La figure 8 représente, de façon très schématique et sous forme de blocs, un exemple d'implantation des circuits de la figure 2 dans un téléphone mobile.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, la génération des signaux radiofréquence et leur interprétation n'ont pas été détaillées, les modes de réalisation et modes de mise en œuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures, étant entendu que, en pratique, les dispositifs décrits peuvent être orientés différemment.

Sauf précision contraire, les expressions "environ", "approximativement", "sensiblement", et "de l'ordre de" signifient à 10 % près, de préférence à 5 % près.

Dans la description qui suit, on appelle « signal binaire » un signal qui alterne entre un premier état ou niveau constant, par exemple un état bas, noté « 0 », et un deuxième état ou niveau constant, par exemple un état haut, noté « 1 ». Les signaux binaires peuvent, en pratique, correspondre à des tensions ou à des courants qui peuvent ne pas être parfaitement constants à l'état haut ou bas.

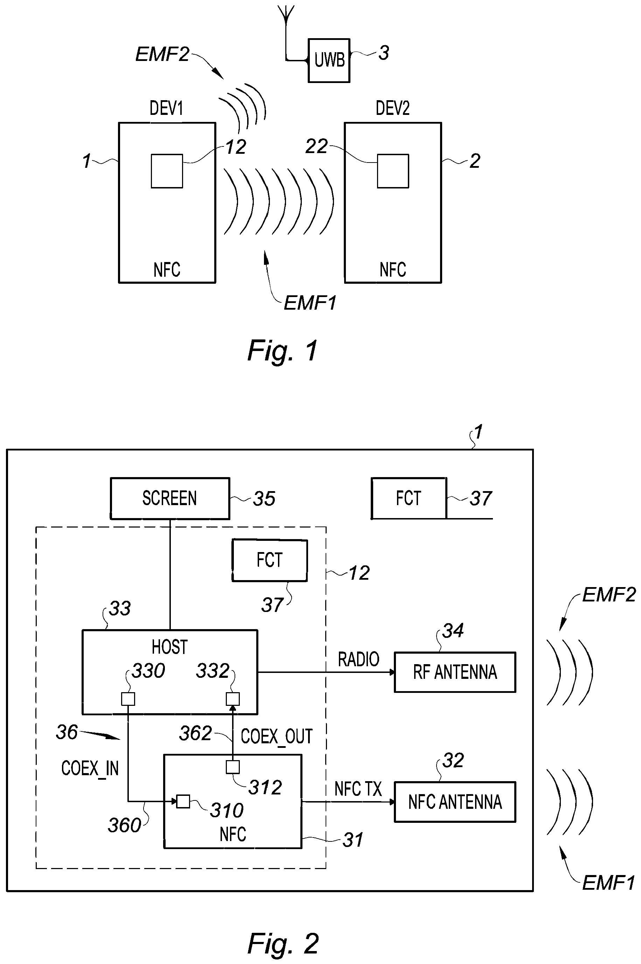

La figure 1 représente, de façon très schématique et sous forme de blocs, un exemple de système du type auquel s'appliquent, à titre d'exemple, des modes de réalisation décrits.

On suppose le cas de deux dispositifs électroniques similaires, par exemple deux téléphones mobiles, mais tout ce qui va être décrit s'applique plus généralement à tout système dans lequel un lecteur, borne ou terminal, doit détecter et communiquer avec un transpondeur électromagnétique ou une étiquette électronique (TAG). Pour simplifier, on fera référence à des dispositifs NFC pour designer des dispositifs électroniques intégrant des circuits de communication en champ proche.

Deux dispositifs NFC 1 (DEV1) et 2 (DEV2) sont susceptibles de communiquer par couplage électromagnétique en champ proche. Selon les applications, pour une communication, l'un des dispositifs fonctionne en mode dit lecteur tandis que l'autre fonctionne en mode dit carte, ou les deux dispositifs communiquent en mode poste à poste (peer-to-peer - P2P). Chaque dispositif comporte divers circuits électroniques 12 et 22 de génération et/ou de détection d'un signal radiofréquence à l'aide d'une antenne (non représentée). Le champ radiofréquence généré par l'un des dispositifs est capté par l'autre dispositif qui se trouve à portée.

Lorsqu'un dispositif (par exemple le dispositif 1) émet un champ électromagnétique (EMF1) pour initier une communication avec un autre dispositif NFC (par exemple le dispositif 2), ce champ est capté par ce dispositif 2 dès qu'il se trouve à portée. Le couplage entre les deux circuits oscillants (celui de l'antenne du dispositif 2 et celui de l'antenne du dispositif 1) se traduit par une variation de la charge constituée par les circuits du dispositif 2 sur le circuit oscillant de génération du champ du dispositif 1. En pratique, pour une communication, la variation correspondante de phase ou d'amplitude du champ émis est détectée par le dispositif 1 qui entame alors un protocole de communication NFC avec le dispositif 2. Côté dispositif 1, on détecte en pratique si l'amplitude de la tension aux bornes du circuit oscillant et/ou le déphasage par rapport au signal généré par le circuit 12 sortent de fenêtres d'amplitudes et de phases définies chacune par un seuil inférieur et un seuil supérieur.

Lorsque le dispositif 1 détecte la présence du dispositif 2 dans son champ, il entame une procédure d'établissement de communication, mettant en œuvre des émissions de requêtes par le dispositif 1 et de réponses par le dispositif 2 (séquence d'interrogation telle que définie dans la norme NFC Forum). Les circuits du dispositif 2, s'ils sont en veille, sont alors réactivés.

Pour des raisons d'économie d'énergie, le dispositif émetteur 1, qu'il soit raccordé sur le secteur de distribution électrique ou alimenté directement ou indirectement par batterie, est mis en veille lorsqu'il n'est pas utilisé pour une communication. Les dispositifs NFC sont généralement équipés de circuits de détection d'un autre dispositif se trouvant dans leur champ afin de sortir d'un mode de veille à des fins de communication.

Dans certaines applications, lorsqu'un dispositif NFC n'est pas en cours de communication, il est commuté en mode dit basse consommation (Low Power) afin de réduire l'énergie consommée. Cela est en particulier le cas pour les dispositifs alimentés par batteries. Dans ce mode basse consommation, un dispositif configuré en mode lecteur exécute un mode dit de détection de carte (Tag detection ou Card detection) et exécute des boucles de détection. La détection est similaire à celle opérée lorsque le dispositif n'est pas en mode basse consommation, mais la différence est que, en mode normal, l'émission de la porteuse est continue et inclut périodiquement des trames d'interrogation alors que, pour réduire la consommation, l'émission du champ s'effectue par salves (burst) périodiques et sans trame d'interrogation lorsque le dispositif est en mode basse consommation. Les salves sont d'une durée nettement inférieure (dans un rapport d'au moins dix, de préférence d'au moins cent) à la durée d'une requête d'interrogation d'une carte en mode normal.

Lorsqu'il est en mode basse consommation, un dispositif NFC capable d'opérer à la fois en mode lecteur et en mode carte alterne des phases d'émission de champ et des phases de détection de champ. Les phases d'émission de champ servent à détecter la présence d'un dispositif en mode carte à portée. Les phases de détection de champ permettent au dispositif de détecter la présence éventuelle d'un champ émis par un autre dispositif en mode lecteur se trouvant à portée.

Les circuits de communication en champ proche sont de plus en plus souvent intégrés dans des dispositifs ayant d'autres fonctions de communication que NFC. C'est le cas notamment des téléphones mobiles, qui intègrent des circuits et fonctions de téléphonie mobile et des circuits et fonctions NFC et, le plus souvent, également des fonctions et circuits WiFi, Bluetooth, etc. Les ordinateurs portables peuvent constituer un autre exemple de dispositifs NFC tout en ayant des circuits et fonctions WiFi, Bluetooth, etc.

En figure 1, on suppose que le dispositif 1 émet, outre le champ électromagnétique EMF1 destiné à établir une communication avec le dispositif 2, un autre champ électromagnétique radiofréquence (EMF2) adapté à véhiculer des signaux à destination d'un récepteur ultra large bande 3 (Ultra Wideband - UWB).

Dans certains cas, l'émission de champ par un dispositif NFC pose alors problème car elle perturbe la communication ultra large bande. De telles perturbations peuvent se produire pour d'autres fonctions mises en œuvre par le dispositif NFC, notamment un processus de rafraîchissement d'un écran du dispositif NFC.

Les modes de réalisation et modes de mise en œuvre décrits ci-dessous visent à résoudre ces problèmes de perturbations dues à l'émission de champ.

La figure 2 représente, de façon très schématique et sous forme de blocs, un mode de réalisation d'un dispositif de communication en champ proche, par exemple le dispositif 1 de la figure 1.

Selon ce mode de réalisation, le dispositif 1, ou son circuit 12, comporte un premier circuit 31 (NFC), par exemple un circuit de communication en champ proche relié, de préférence connecté, à une première antenne 32 (NFC ANTENNA), par exemple une antenne de communication en champ proche. Un premier signal, noté NFC TX, permet de commander une émission de champ par la première antenne 32 de communication en champ proche. Le signal NFC TX est transmis depuis le premier circuit 31 vers la première antenne 32, et provoque l'émission du champ électromagnétique EMF1 par la première antenne 32.

Le dispositif 1, ou son circuit 12, comporte, en outre, un deuxième circuit 33 (HOST). Ce deuxième circuit 33 est, par exemple, un microcontrôleur, un microprocesseur ou un circuit de communication à ultra large bande du dispositif 1. Le deuxième circuit 33 est ici relié, de préférence connecté, à une deuxième antenne 34 (RF ANTENNA) de communication radiofréquence. Un deuxième signal, noté RADIO, permet de commander une transmission d'un signal radiofréquence en utilisant la deuxième antenne 34. Le signal RADIO est transmis depuis le deuxième circuit 33 vers la deuxième antenne 34, et provoque l'émission du champ électromagnétique EMF2 par la deuxième antenne 34.

Le deuxième circuit 33 est en outre relié, de préférence connecté, à un écran 35 (SCREEN), par exemple un écran d'affichage principal du dispositif 1. On suppose que le deuxième circuit 33 gère un rafraîchissement de l'écran 35. En d'autres termes, on suppose que le deuxième circuit 33 provoque, de façon périodique, une mise à jour de pixels d'affichage de l'écran 35.

Selon ce mode de réalisation, le deuxième circuit 33 est relié, de préférence connecté, au premier circuit NFC 31 par une liaison 36 matérielle. La liaison 36 comporte un premier conducteur 360 et un deuxième conducteur 362 reliant, de préférence connectant, des bornes du premier circuit 31 à des bornes du deuxième circuit 33. Plus précisément, comme illustré en figure 2 :
le premier conducteur 360 relie, de préférence connecte, une première borne 330 de sortie du deuxième circuit 33 à une première borne 310 d'entrée du premier circuit 31 ; et
le deuxième conducteur 362 relie, de préférence connecte, une deuxième borne 312 de sortie du premier circuit 31 à une deuxième borne 332 d'entrée du deuxième circuit 33.

Les bornes 310, 312, 330 et 332 sont, par exemple, des bornes d'entrées-sorties universelles (General Purpose Input/Output - GPIO) des circuits 31 et 33. Le cas échéant :
les bornes 312 et 330 sont configurées comme des sorties ; et
les bornes 310 et 332 sont configurées comme des entrées.

Le premier conducteur 360 est dédié à une transmission, depuis le circuit 33 vers le circuit 31, d'un troisième signal, noté COEX_IN. Le deuxième conducteur 362 est dédié à une transmission, depuis le circuit 31 vers le circuit 33, d'un quatrième signal, noté COEX_OUT. Selon ce mode de réalisation, les signaux COEX_IN et COEX_OUT sont des signaux binaires commutés respectivement par le deuxième circuit 33 et par le premier circuit 31.

Les signaux COEX_IN et COEX_OUT permettent respectivement de donner priorité soit à des opérations mises en œuvre par le circuit 31, soit à des opérations mises en œuvre par le deuxième circuit 33. En particulier, les signaux COEX_IN et COEX_OUT, échangés entre les circuits 31 et 33, permettent de faire en sorte que l'émission du champ électromagnétique EMF1 par le premier circuit 31, d'une part, et l'émission du champ électromagnétique EMF2 ou le rafraîchissement de l'écran 35 par le deuxième circuit 33, d'autre part, ne s'effectuent pas de manière simultanée.

Le dispositif 1 peut également comporter un ou plusieurs autres éléments ou circuits électroniques. Ces éléments ou circuits électroniques, dont le fonctionnement ne sera pas détaillé dans la description ci-dessous, sont symbolisés, en figure 2, par des blocs fonctionnels 37 (FCT).

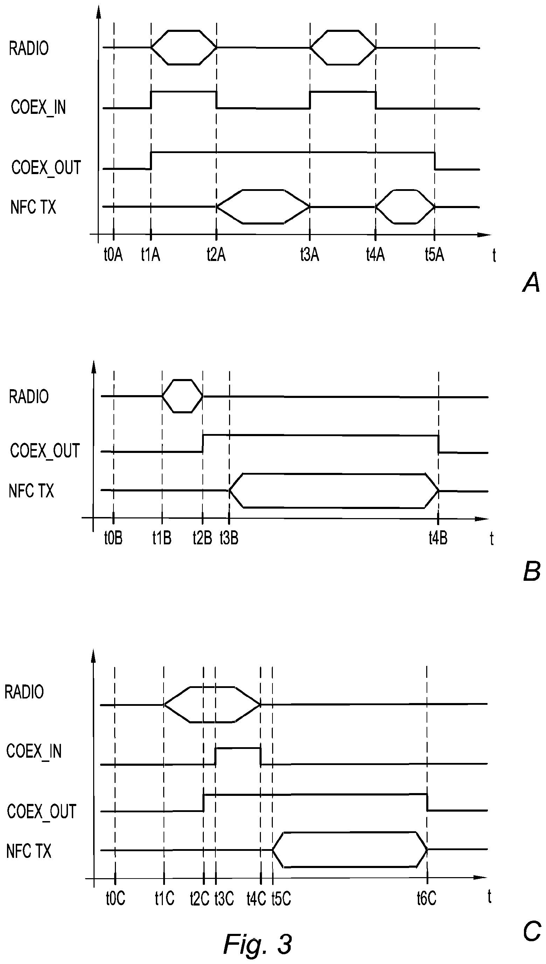

La figure 3 représente, par des vues A, B et C, des chronogrammes de modes de mise en œuvre de procédés de commande du dispositif décrit en relation avec la figure 2. Ces chronogrammes traduisent en particulier des exemples d'évolution, en fonction du temps (t), des signaux RADIO, COEX_IN, COEX_OUT et NFC TX.

En vue A, le chronogramme illustre un mode de mise en œuvre dans lequel la priorité est donnée à l'émission du champ EMF2 par le deuxième circuit 33. Le deuxième circuit 33 joue ici le rôle de circuit prioritaire. Selon ce mode de mise en œuvre, le signal COEX_IN fait office de signal d'inhibition du premier circuit 31. En particulier, le signal COEX_IN est ici adapté à empêcher une émission en champ proche par le premier circuit 31. Le signal COEX_OUT fait alors office de signal d'état du premier circuit 31. En particulier, le signal COEX_OUT est ici adapté à transmettre, au deuxième circuit 33, une requête d'émission en champ proche par le premier circuit 31.

Selon le mode de mise en œuvre de la vue A, on considère que :
un état bas du signal COEX_IN indique que le premier circuit 31 est autorisé à émettre en champ proche ;
un état haut du signal COEX_IN indique que le premier circuit 31 a interdiction d'émettre en champ proche ;
un état bas du signal COEX_OUT indique que le premier circuit 31 ne souhaite pas émettre ou n'émet pas en champ proche ; et
un état haut du signal COEX_OUT indique que le premier circuit 31 souhaite émettre ou émet en champ proche.

À un instant t0A, les signaux RADIO, COEX_IN, COEX_OUT et NFC TX sont au repos. En particulier, les signaux NFC TX et RADIO sont dans un état tel qu'ils ne donnent lieu à aucune émission de champ par les antennes 32 et 34, respectivement. Les signaux binaires COEX_IN et COEX_OUT sont tous deux à un état ou niveau bas. Cela signifie, selon ce mode de mise en œuvre, que le premier circuit 31 est autorisé à émettre en champ proche, mais ne souhaite pas émettre.

À un instant t1A, postérieur à l'instant t0A, on suppose que des commandes d'émission parviennent simultanément au premier circuit 31 et au deuxième circuit 33. À l'instant t1A, le premier circuit 31 commute donc son signal COEX_OUT depuis l'état bas vers un état ou niveau haut. Cette commutation du signal COEX_OUT a pour but de signifier, au deuxième circuit 33, que le premier circuit 31 souhaite débuter une émission en champ proche.

Toutefois, l'émission du deuxième circuit 33 est, dans le mode de mise en œuvre de la vue A, prioritaire par rapport à l'émission du premier circuit 31. Le deuxième circuit 33 interdit donc au premier circuit 31 l'émission en champ proche. Pour cela, le deuxième circuit 33 commute, à l'instant t1A, le signal COEX_IN de l'état bas vers un état ou niveau haut. Le deuxième circuit 33 débute l'émission du signal RADIO. Pendant ce temps, le signal NFC TX est maintenu au repos.

À un instant t2A, postérieur à l'instant t1A, le deuxième circuit 33 achève sa transmission. Le signal RADIO est ramené au repos. Le signal COEX_IN est alors commuté vers l'état bas. Cela indique que le premier circuit 31 est autorisé à émettre en champ proche. Le signal COEX_OUT est toujours à l'état haut à l'instant t2A, ce qui indique donc que le premier circuit 31 est disposé à émettre. L'émission du signal NFC TX peut alors débuter.

On suppose qu'à un instant t3A, postérieur à l'instant t2A, le deuxième circuit 33 souhaite à nouveau émettre. Le deuxième circuit 33 commute alors le signal COEX_IN vers l'état haut. Cela interrompt l'émission en champ proche par le premier circuit 31. Le signal NFC TX est alors mis au repos tandis que le deuxième circuit 33 émet.

À un instant t4A, postérieur à l'instant t3A, l'émission du deuxième circuit 33 cesse. Le signal COEX_IN est commuté vers l'état bas. Le signal COEX_OUT est alors toujours à l'état haut. L'émission du premier circuit 31 peut donc reprendre.

À un instant t5A, postérieur à l'instant t4A, l'émission du premier circuit 31 s'achève. Le signal COEX_OUT est alors commuté vers l'état bas par le premier circuit 31. Cela signifie que le premier circuit 31 ne souhaite plus émettre.

En variante, seul le signal d'inhibition COEX_IN est transmis du deuxième circuit 33 au premier circuit 31. Cela permet alors d'utiliser uniquement le premier conducteur 360 de la liaison 36 (figure 2). On réduit ainsi le nombre de conducteurs de la liaison reliant, de préférence connectant, le premier circuit 31 au deuxième circuit 33. On réduit aussi le nombre de bornes des circuits 31 et 33 dédiées à la gestion des priorités d'émission entre ces deux circuits.

En vue B, le chronogramme illustre un autre mode de mise en œuvre dans lequel la priorité est donnée à l'émission du champ EMF1, c'est-à-dire à l'émission en champ proche par le premier circuit 31. Contrairement au mode de mise en œuvre exposé en relation avec la vue A, c'est ici le premier circuit 31 qui joue le rôle du circuit prioritaire. Selon ce mode de mise en œuvre, le signal COEX_OUT fait office de signal d'inhibition du deuxième circuit 33. En particulier, le signal COEX_OUT est ici adapté à empêcher une émission radiofréquence par le deuxième circuit 33. La transmission du signal COEX_IN peut ici être omise.

Selon le mode de mise en œuvre de la vue B, on considère que :
l'état bas du signal COEX_OUT indique que le deuxième circuit 33 est autorisé à émettre un signal radiofréquence ; et
l'état haut du signal COEX_OUT indique que le deuxième circuit 33 a interdiction d'émettre un signal radiofréquence.

À un instant t0B, les signaux RADIO, COEX_IN, COEX_OUT et NFC TX sont au repos. En particulier, les signaux NFC TX et RADIO sont dans un état tel qu'ils ne donnent lieu à aucune émission de champ par les antennes 32 et 34, respectivement. Le signal binaire COEX_OUT est à un état bas. Cela signifie, selon ce mode de mise en œuvre, que le deuxième circuit 33 est autorisé à émettre.

À un instant t1B, postérieur à l'instant t0B, on suppose qu'une commande d'émission parvient au deuxième circuit 33. À l'instant t1B, le signal COEX_OUT d'inhibition du deuxième circuit 33 est à l'état bas. Cela signifie que l'émission du deuxième circuit 33 est permise. Le deuxième circuit 33 débute alors l'émission du signal RADIO. Pendant ce temps, le signal NFC TX est maintenu au repos.

On suppose qu'à un instant t2B, postérieur à l'instant t1B, le premier circuit 31 souhaite communiquer en champ proche. Le premier circuit 31 commute alors le signal COEX_OUT vers l'état haut. Cela interrompt l'émission du deuxième circuit 33. Le signal RADIO est alors mis au repos.

À un instant t3B, postérieur à l'instant t2B, le premier circuit 31 débute une émission en champ proche.

À un instant t4B, postérieur à l'instant t3B, l'émission du premier circuit 31 cesse. Le signal COEX_OUT est alors commuté vers l'état bas.

En variante, le signal COEX_IN est également échangé entre le premier circuit 31 et le deuxième circuit 33. Cela permet alors par exemple au premier circuit 31 de connaître l'état du circuit 33.

En vue C, le chronogramme illustre encore un autre mode de mise en œuvre dans lequel l'émission d'un circuit, parmi les circuits 31 et 33, n'est possible qu'après que l'autre circuit a cessé d'émettre. En d'autres termes, on choisit arbitrairement de donner la priorité au circuit dont l'émission a déjà débuté et n'est pas encore achevée.

Ainsi, selon le mode de mise en œuvre de la vue C :
la mise à l'état haut du signal COEX_IN pendant l'émission du deuxième circuit 33 permet d'inhiber l'émission du premier circuit 31 ; et
la mise à l'état haut du signal COEX_OUT pendant l'émission du deuxième circuit 33 permet d'indiquer au deuxième circuit 33 que le premier circuit 31 souhaite émettre.

De façon analogue, toujours selon le mode de mise en œuvre de la vue C :
la mise à l'état haut du signal COEX_OUT pendant l'émission du premier circuit 31 permet d'inhiber l'émission du deuxième circuit 33 ; et
la mise à l'état haut du signal COEX_IN pendant l'émission du premier circuit 31 permet d'indiquer au premier circuit 31 que le deuxième circuit 33 souhaite émettre.

À un instant t0C, les signaux RADIO, COEX_IN, COEX_OUT et NFC TX sont au repos. En particulier, les signaux NFC TX et RADIO sont dans un état tel qu'ils ne donnent lieu à aucune émission de champ par les antennes 32 et 34, respectivement. Les signaux binaires COEX_IN et COEX_OUT sont tous deux à l'état bas. Cela indique que ni le premier circuit 31, ni le deuxième circuit 33, ne souhaitent émettre.

À un instant t1C, postérieur à l'instant t0C, le deuxième circuit 33 commence à émettre.

À un instant t2C, postérieur à l'instant t1C, on suppose que le premier circuit 31 veut débuter une émission en champ proche. Le signal COEX_OUT est alors commuté vers l'état haut. Cela indique que le premier circuit 31 souhaite émettre.

À un instant t3C, postérieur à l'instant t2C, le deuxième circuit 33 commute le signal COEX_IN vers l'état haut. Cela interdit l'émission du premier circuit 31. Cette interdiction est maintenue tant que l'émission du deuxième circuit 33 n'est pas achevée.

À un instant t4C, postérieur à l'instant t3C, le deuxième circuit 33 cesse d'émettre. Le deuxième circuit 33 commute alors le signal COEX_IN vers l'état bas. Cela autorise l'émission du premier circuit 31.

À un instant t5C, postérieur à l'instant t4C, le signal COEX_OUT est encore à l'état haut tandis que le signal COEX_IN est à l'état bas. Le premier circuit 31 commence alors à émettre.

À un instant t6C, postérieur à l'instant t5C, l'émission en champ proche par le premier circuit 31 s'achève. Le signal COEX_OUT est alors commuté vers l'état bas.

En supposant que le deuxième circuit 33 ait voulu émettre entre les instants t5C et t6C, le deuxième circuit aurait commuté le signal COEX_IN. Le signal COEX_OUT étant à l'état haut entre les instants t5C et t6C, l'émission du deuxième circuit 33 aurait néanmoins été interdite jusqu'à ce que l'émission du premier circuit 31 s'achève, c'est-à-dire jusqu'à l'instant t6C où le signal COEX_OUT est commuté vers l'état bas.

Les modes de mise en œuvre exposés ci-dessus en relation avec la figure 3 illustrent des exemples dans lesquels les signaux COEX_IN et COEX_OUT permettent de gérer ou d'arbitrer des priorités entre l'émission en champ proche par le premier circuit 31 et l'émission radiofréquence par le deuxième circuit 33. Ces modes de mise en œuvre sont néanmoins transposables à d'autres situations dans lesquelles on cherche à bloquer l'émission en champ proche par le premier circuit 31 pendant que des opérations, par exemple de rafraîchissement de l'écran 35, sont effectuées par le deuxième circuit 33. Cette transposition est à la portée de l'homme du métier à partir des indications ci-dessus.

On peut également prévoir un mode de mise en œuvre dans lequel une ou plusieurs opérations réalisées par le premier circuit 31 bloquent ou inhibent une ou plusieurs opérations réalisées par le deuxième circuit 33. Inversement, on peut prévoir un autre mode de mise en œuvre dans lequel une ou plusieurs opérations réalisées par le deuxième circuit 33 bloquent ou inhibent une ou plusieurs opérations réalisées par le premier circuit 31. Ces combinaisons sont à la portée de l'homme du métier à partir des indications de la présente description.

Ce qui a été décrit en relation avec les vues A, B et C en référence à des états haut et bas se transpose à des états inverses (bas et haut).

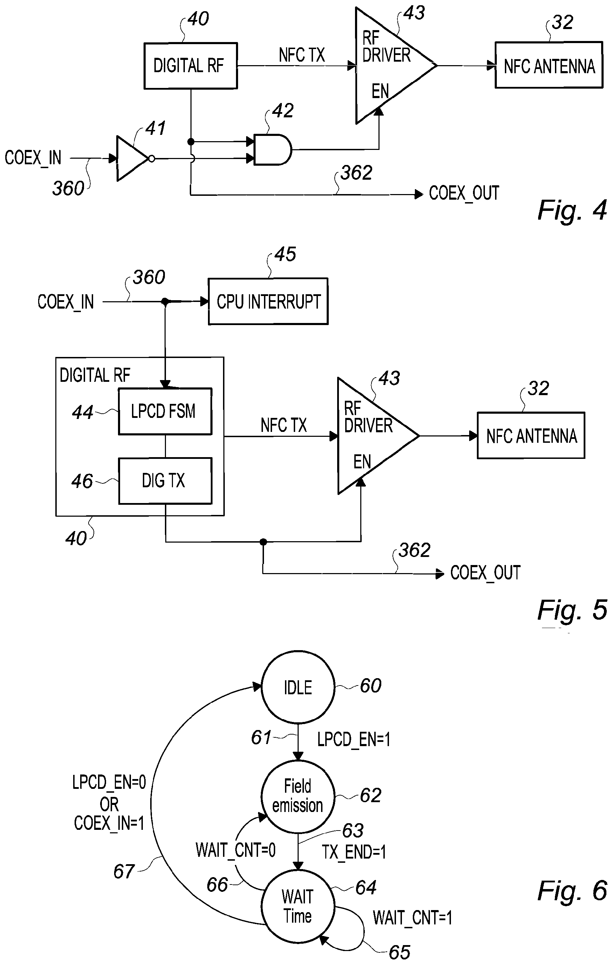

La figure 4 représente, de façon schématique, un mode de réalisation d'un circuit de commande du dispositif décrit en relation avec la figure 2.

Selon ce mode de réalisation, le deuxième conducteur 362 permettant de transmettre le signal COEX_OUT est relié, de préférence connecté, à une sortie d'un circuit 40 (DIGITAL RF) de communication radiofréquence du module NFC. Le premier conducteur 360, qui transmet le signal COEX_IN depuis le deuxième circuit 33, est relié, de préférence connecté, à une entrée d'une première porte logique 41. La porte logique 41 est, comme illustré en figure 4, un inverseur. La porte logique 41 permet ainsi d'obtenir, en sortie de la porte 41, un signal binaire d'état ou de niveau inverse de celui du signal binaire COEX_IN en entrée de la porte 41.

La sortie de la porte logique 41 est reliée, de préférence connectée, à une entrée d'une deuxième porte logique 42. La porte logique 42 est, comme illustré en figure 4, une porte ET. La sortie du circuit 40 est reliée, de préférence connectée, à une autre entrée de la deuxième porte logique 42. On obtient ainsi, en sortie de la porte logique 42, un signal binaire à l'état haut lorsque le signal COEX_IN est à l'état bas et lorsque le signal COEX_OUT est à l'état haut, et un signal binaire à l'état bas sinon. La sortie de la porte logique 42 est reliée, de préférence connectée, à une entrée (EN) d'activation (enable) d'un amplificateur 43 (RF DRIVER) du signal radiofréquence NFC TX destiné à une antenne, par exemple l'antenne NFC 32 (NFC ANTENNA).

Selon ce mode de réalisation, le signal COEX_IN est adapté à empêcher ou bloquer une émission radiofréquence NFC tandis que le signal COEX_OUT est adapté à communiquer une requête ou commande d'émission au circuit 33 et à activer, sous contrôle du signal COEX_IN, l'émission NFC. On reproduit ainsi, en logique câblée au moyen des portes 41 et 42, un fonctionnement similaire à celui du mode de mise en œuvre du procédé exposé précédemment en relation avec la vue A de la figure 3.

En variante, les signaux COEX_IN et COEX_OUT sont traités de façon logicielle, par exemple par le circuit 40. Les portes logiques 41 et 42 sont alors, par exemple, programmées dans le logiciel (firmware) du circuit 40. Le cas échéant, le signal COEX_IN est transmis directement au circuit 40 et l'entrée EN du circuit 43 est pilotée par une sortie du circuit 40.

La figure 5 représente, de façon schématique, un autre mode de réalisation d'un circuit de commande du dispositif décrit en relation avec la figure 2.

Selon ce mode de réalisation, le premier conducteur 360, qui transmet le signal COEX_IN depuis le deuxième circuit 33, est relié, de préférence connecté, à une entrée d'une machine d'états 44 (LPCD FSM). La machine d'états 44 fait par exemple partie du circuit 40 de communication radiofréquence du module NFC du premier circuit 31.

Le signal COEX_IN est également transmis à un processeur ou microcontrôleur du premier circuit 31. Une commutation vers l'état haut du signal COEX_IN provoque une interruption (bloc 45, CPU INTERRUPT) d'opérations réalisées par ce processeur.

Une sortie de la machine d'états 44 est reliée, de préférence connectée, à une entrée d'un circuit 46 (DIG TX), par exemple un modem NFC. Le circuit 46 fait par exemple partie du circuit 40 (DIGITAL RF) de communication radiofréquence du module NFC comme illustré en figure 5. Le circuit 46 est, par exemple, un circuit dédié à l'émission de champ (NFC TX) . Le circuit 46 peut notamment contrôler une puissance d'émission, une impédance de sortie, etc. Une sortie du circuit 46 est reliée, de préférence connectée, au conducteur 362 permettant de transmettre le signal COEX_OUT au deuxième circuit 33. La sortie du circuit 46 est reliée, de préférence connectée, à une entrée (EN) d'activation (enable) d'un amplificateur 43 (RF DRIVER) du signal radiofréquence NFC TX destiné à une antenne, par exemple l'antenne NFC 32 (NFC ANTENNA). Le circuit 46 peut correspondre à une partie numérique de l'amplificateur 43.

De façon analogue au mode de réalisation exposé en relation avec la figure 4, le signal COEX_IN est adapté à empêcher ou bloquer une émission radiofréquence NFC tandis que le signal COEX_OUT est adapté à communiquer une requête ou commande d'émission au circuit 33 et à activer, sous contrôle du signal COEX_IN, l'émission NFC. On reproduit ainsi, en logique câblée au moyen de la machine d'états 44 du premier circuit 31, un fonctionnement similaire à celui du mode de mise en œuvre du procédé exposé précédemment en relation avec la vue A de la figure 3.

La figure 6 est un diagramme d'enchaînement d'étapes d'un mode de mise en œuvre d'un procédé de commande du circuit décrit en relation avec la figure 5.

Selon ce mode de mise en œuvre, le premier circuit 31 d'émission NFC est initialement dans un état de repos (bloc 60, IDLE). Lorsque le premier circuit 31 souhaite émettre en champ proche, la machine d'états 44 (figure 5) active (flèche 61, LPCD_EN=1) l'amplificateur 43 par son entrée EN. Cela permet ainsi d'autoriser l'émission en champ proche du signal NFC TX par l'antenne 32. Le premier circuit 31 se trouve alors dans un état d'émission (bloc 62, Field emission) en champ proche.

Une fois l'émission en champ proche achevée, le premier circuit 31 passe (flèche 63, TX_END=1) dans un état d'attente (bloc 64, WAIT Time). On lance alors une temporisation adaptée à maintenir temporairement le premier circuit 31 dans l'état d'attente 64, c'est-à-dire pendant une durée notée CNT. Le premier circuit 31 est censé demeurer dans l'état d'attente 64 tant que la durée CNT n'est pas écoulée (flèche 65, WAIT_CNT=1) . Le premier circuit 31 repasse alors dans l'état d'émission 62 une fois la durée CNT écoulée (flèche 66, WAIT_CNT=0).

Le premier circuit 31 peut, en outre, sortir de l'état d'attente 64 et repasser (flèche 67, LPCD_EN=0 OR COEX_IN=1) à l'état de repos 60 avant que la durée CNT ne soit écoulée. Cela se produit par exemple si la machine d'états 44 désactive l'entrée EN de l'amplificateur 43 ou si le signal COEX_IN est commuté à l'état haut par le deuxième circuit 33.

Selon ce mode de mise en œuvre, le deuxième circuit 33 est prioritaire par rapport au premier circuit 31. Le premier circuit 31 est ici autorisé à émettre en champ proche sous contrôle du signal COEX_IN transmis par le deuxième circuit 33. L'émission en champ proche 62 s'achève toutefois uniquement à l'initiative du premier circuit 31, le signal COEX_IN n'étant ici pris en compte que dans l'état d'attente 64. Dans ce cas, la machine d'états active l'amplificateur 43 avec la condition supplémentaire que le signal COEX_IN soit à l'état bas.

Le premier circuit 31 est ici configuré pour que l'émission du champ 62 s'effectue par salves périodiques, entrecoupées par des phases d'attente 64. Ce mode de fonctionnement du circuit 31 est qualifié de mode de détection de carte basse consommation (Low Power Card Detection - LPCD) .

Selon un mode de mise en œuvre préféré, dans ce mode basse consommation, chaque émission en champ proche 62 du premier circuit 31 s'effectue par salves d'une durée d'environ 30 µs. Cette émission est répétée environ trois à quatre fois par seconde, la durée CNT, correspondant à un intervalle entre salves, étant par conséquent comprise entre environ 250 ms et environ 330 ms.

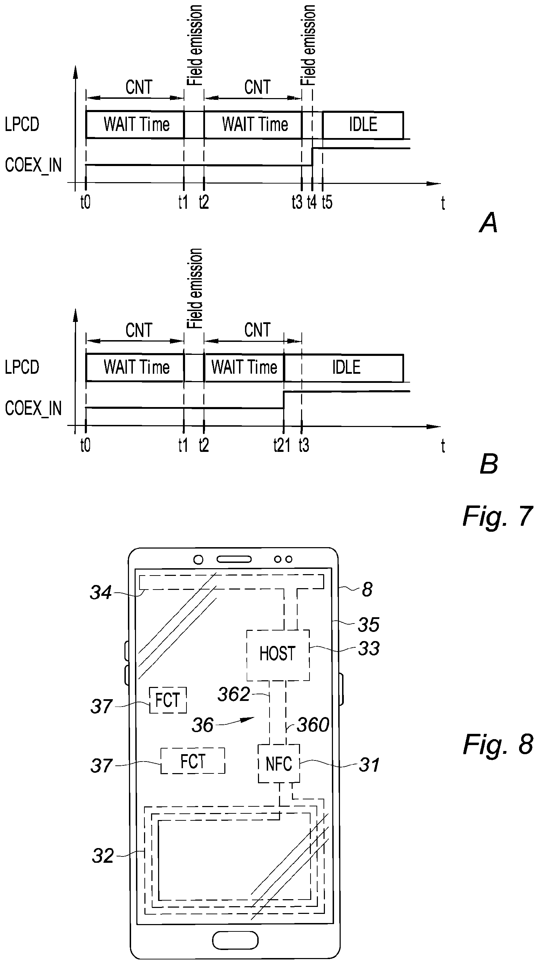

La figure 7 représente, par des vues A et B, des chronogrammes du procédé de commande décrit en relation avec la figure 6. Ces chronogrammes traduisent en particulier des exemples d'évolution, en fonction du temps (t), du signal COEX_IN et de l'état du premier circuit 31, noté LPCD.

En vue A, le chronogramme illustre un exemple d'évolution selon lequel la commutation du signal COEX_IN vers l'état haut intervient pendant l'émission en champ proche du premier circuit 31.

À un instant t0, on suppose que le premier circuit 31 entre dans l'état d'attente (WAIT Time) tandis que le signal COEX_IN est à l'état bas.

À un instant t1, postérieur à l'instant t0 et séparé de l'instant t0 par la durée CNT, le signal COEX_IN est encore à l'état bas. Le premier circuit 31 entre donc dans l'état d'émission en champ proche (Field emission).

À un instant t2, postérieur à l'instant t1, la salve d'émission en champ proche par le premier circuit s'achève. Le signal COEX_IN étant encore à l'état bas, le premier circuit 31 est remis dans l'état d'attente (WAIT Time).

À un instant t3, postérieur à l'instant t2 et séparé de l'instant t2 par la durée CNT, le signal COEX_IN est encore à l'état bas. Le premier circuit 31 entre donc de nouveau dans l'état d'émission en champ proche (Field emission).

À un instant t4, postérieur à l'instant t3, le signal COEX_IN est commuté vers l'état haut par le deuxième circuit 33 pendant l'émission en champ proche par le premier circuit 31. Selon ce mode de mise en œuvre, la commutation du signal COEX_IN n'interrompt pas l'émission en champ proche.

À un instant t5, postérieur à l'instant t4, l'émission en champ proche par le premier circuit 31 s'achève. Le signal COEX_IN étant à l'état haut, le premier circuit 31 a interdiction d'émettre à nouveau. Le premier circuit 31 est alors placé dans l'état de repos (IDLE).

En vue B, le chronogramme illustre un exemple d'évolution selon lequel la commutation du signal COEX_IN vers l'état haut intervient en dehors de l'émission en champ proche du premier circuit 31.

Entre les instants t0 et t2, le chronogramme de la vue B est semblable au chronogramme de la vue A.

À un instant t21, postérieur à l'instant t2 et séparé de l'instant t2 par une durée inférieure à la durée CNT, le signal COEX_IN est commuté vers l'état haut par le deuxième circuit 33. En vue B, le premier circuit 31 se trouve ainsi dans l'état d'attente (WAIT Time) au moment de la commutation du signal COEX_IN. Le premier circuit 31 est alors placé dans l'état de repos (IDLE) à l'instant t21 sans attendre l'expiration de la durée CNT prévue à l'instant t3, postérieur à l'instant t21.

Un avantage du mode de mise en œuvre exposé en relation avec les figures 6 et 7 réside dans le fait que l'émission du premier circuit 31 n'est pas interrompue de façon brutale par le deuxième circuit 33. On évite ainsi de perturber le fonctionnement du premier circuit 31, en particulier lorsque ce premier circuit 31 est configuré en mode de détection de carte basse consommation.

Dans le cas d'une émission en champ proche dans un mode dit normal, autrement dit un mode dans lequel l'émission en champ proche s'effectue en continu, on a généralement besoin de pouvoir interrompre l'émission dans un délai maximal d'environ 300 µs à 400 µs suite à la demande d'un circuit prioritaire. Le mode de mise en œuvre exposé en relation avec les figures 6 et 7 est avantageusement compatible avec ce besoin, même en laissant une salve s'achever. En effet, l'émission en champ proche du premier circuit 31 s'arrête au bout d'une durée de l'ordre de 30 µs. En outre, on préfère une mise en œuvre matérielle (en logique câblée) pour des raisons de rapidité par rapport à une mise en œuvre logicielle.

La figure 8 représente, de façon très schématique et sous forme de blocs, un exemple d'implantation des circuits de la figure 2 dans un téléphone mobile 8. Dans l'exemple de la figure 8, le téléphone mobile 8 comporte des éléments semblables à ceux du dispositif 1 de la figure 2 (en figure 8, ces éléments sont représentés en pointillé).

Le téléphone mobile 8 comporte notamment le premier circuit NFC 31 connecté à l'antenne 32 et le deuxième circuit 33 connecté à l'antenne 34. Les circuits 31 et 33 sont reliés, de préférence connectés, par la liaison 36. Cela permet au téléphone 8 de gérer des priorités entre des opérations effectuées par le premier circuit 31 et d'autres opérations effectuées par le deuxième circuit 33. Par exemple, l'émission en champ proche par l'antenne 32 peut être inhibée à chaque rafraîchissement l'écran principal 35 du téléphone 8.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, ce qui est exposé plus particulièrement en relation avec un exemple d'application à une gestion de priorités entre une émission en champ proche et une émission radiofréquence et/ou un rafraîchissement d'écran s'applique plus généralement à une inhibition d'une ou plusieurs fonctionnalités d'un circuit par un autre circuit grâce à une liaison dédiée.

Enfin, la mise en œuvre pratique des modes de réalisation et variantes décrits est à la portée de l'homme du métier à partir des indications fonctionnelles données ci-dessus. En particulier, l'implantation de la liaison 36 dans le téléphone mobile 8 est à la portée de l'homme du métier.

## Revendications

1. Dispositif (1 ; 8) comportant :
un premier circuit (31) d'émission en champ proche ;
un deuxième circuit (33) ; et
une liaison matérielle (36) reliant, de préférence connectant, le premier circuit au deuxième circuit, la liaison étant dédiée à une gestion de priorités entre le premier circuit et le deuxième circuit,
dans lequel la gestion de priorités est effectuée par au moins un circuit (44) configuré de sorte que, si le premier circuit reçoit une commande d'inhibition, transmise par le deuxième circuit, pendant une salve d'émission de champ, l'inhibition du premier circuit est retardée jusqu'à la fin de ladite salve.

2. Dispositif selon la revendication 1, dans lequel la gestion de priorités est adaptée à empêcher une émission en champ proche par le premier circuit (31).

3. Dispositif selon la revendication 1 ou 2, dans lequel le deuxième circuit (33) est un microcontrôleur.

4. Dispositif selon la revendication 1 ou 2, dans lequel le deuxième circuit (33) est un circuit de communication ultra large bande.

5. Dispositif selon l'une quelconque des revendications 1 à 4, dans lequel la liaison (36) véhicule un premier signal binaire (COEX_IN) d'inhibition du premier circuit (31), transmis par le deuxième circuit (33).

6. Dispositif selon la revendication 5, dans lequel le premier signal (COEX_IN) est transmis au premier circuit (31) pendant un rafraîchissement d'un écran (35).

7. Dispositif selon la revendication 5 ou 6, dans lequel le premier signal (COEX_IN) est transmis au premier circuit (31) pendant une émission radiofréquence commandée par le deuxième circuit (33).

8. Dispositif selon l'une quelconque des revendications 5 à 7, dans lequel le premier signal (COEX_IN) est traité de façon logicielle.

9. Dispositif selon l'une quelconque des revendications 5 à 7, dans lequel le premier signal (COEX_IN) est traité par une machine d'états (44) en logique câblée faisant partie du premier circuit (31).

10. Dispositif selon l'une quelconque des revendications 1 à 9, dans lequel la liaison (36) véhicule un deuxième signal binaire (COEX_OUT) d'état du premier circuit (31), transmis par le premier circuit (31).

11. Dispositif selon l'une quelconque des revendications 1 à 10, dans lequel la liaison (36) comporte :
un premier conducteur (362), dédié à une transmission depuis le premier circuit (31) vers le deuxième circuit (33) ; et
un deuxième conducteur (360), dédié à une transmission depuis le deuxième circuit (33) vers le premier circuit (31).

12. Dispositif selon les revendications 5, 10 et 11, dans lequel l'un des deux conducteurs (360, 362) véhicule le premier signal (COEX_IN) et l'autre conducteur (360, 362) véhicule le deuxième signal (COEX_OUT).

13. Procédé dans lequel une liaison matérielle (36) d'un dispositif (1 ; 8) selon l'une quelconque des revendication 1 à 12 est dédiée à une gestion de priorités entre le premier circuit et le deuxième circuit.

14. Téléphone mobile (8) adapté à mettre en œuvre le procédé selon la revendication 13.
